# EUROPÄISCHE PATENTSCHRIFT

(11) **EP 0 527 775 B1**
(45) Veröffentlichungstag und Bekanntmachung des Hinweises auf die Patenterteilung: **03.08.1994**
(21) Anmeldenummer: 91907858.4
(22) Anmeldetag: 29.04.1991
(51) Int. Cl.: G01L 1/22

(54) **VERFAHREN ZUM HERSTELLEN EINES SENSORS ZUM BESTIMMEN VON DRUCKKRÄFTEN**
PROCESS FOR THE MANUFACTURE OF A PRESSURE FORCE SENSOR
PROCEDE POUR LA FABRICATION D'UN CAPTEUR SERVANT A DETERMINER DES EFFORTS DE PRESSION

(30) Priorität: 07.05.1990 DE 4014511
(43) Veröffentlichungstag der Anmeldung: 24.02.1993
(73) Patentinhaber: ROBERT BOSCH GMBH, 70442 Stuttgart (DE)
(72) Erfinder: GRÜNWALD, Werner, D-7016 Gerlingen (DE); SCHMID, Kurt, D-7257 Ditzingen 4 (DE); MAST, Martin, D-7016 Gerlingen (DE)
(86) Internationale Anmeldenummer: DE9100359
(87) Internationale Veröffentlichungsnummer: WO9117415

(56) Entgegenhaltungen:
- US-A- 3 626 256

## Beschreibung

### Stand der Technik

Die Erfindung betrifft ein Verfahren zur Herstellung eines Sensors entsprechend dem Oberbegriff des unabhängigen Patentanspruchs 1.

Die Erfindung betrifft auch sensoren, die nach dem beanspruchten Verfahren herstellbar sind.

Ein Verfahren dieser Art wurde in der deutschen Anmeldung P 39 12 280 vorgeschlagen. Darin wird zunächst in Dickschichttechnik eine Drucksensoranordnung auf einen Stahlträger aufgebracht. Anschließend wird die Schichtanordnung mit einer Gießmasse oder mit einem anderen geeigneten Material überzogen und so geschliffen, daß die Oberfläche des Sensors planparallel zur Unterfläche des Trägers verläuft. Neben der Planparallelität soll durch das Schleifen gleichzeitig eine möglichst geringe Oberflächenrauhigkeit erzielt werden, da nur bei einer vollkommen glatten Oberfläche eine gute Flächenpressung möglich ist. Das Schleifen stellt deshalb einen aufwendigen und kostenintensiven Herstellungsschritt dar.

Der Erfindung liegt die Aufgabe zugrunde, ein Verfahren anzugeben, welches es erlaubt, einen Drucksensor mit einer gleichmäßigen Flächenpressung ohne aufwendige Nachbearbeitung kostengünstig herzustellen.

### Vorteile der Erfindung

Der erfindungsgemäß in Dickschichttechnik hergestellte Sensor zeichnet sich durch eine sehr glatte Oberfläche aus, die hervorragende Flächenpressungseigenschaften mit einer Steigerung der Empfindlichkeit und geringer Hysterese ermöglichen. Eine aufwendige Nachbehandlung des einzelnen Sensors zur Herstellung einer glatten Oberfläche entfällt. Stattdessen muß lediglich einmalig eine dann für beliebig viele Herstellungsvorgänge wiederverwendbare Druckunterlage glatt geschliffen werden. Die aktive Schicht aus leitfähigem Plastik-Material zeigt über einen großen Bereich eine weitgehend lineare Druck-Widerstandscharakteristik. Die Sensoren sind mechanisch sehr robust und über einen weiten Bereich temperaturunabhängig. Eine Vielzahl von geometrischen Ausgestaltungen ist möglich. So ist durch entsprechende Gestaltung von Preßwerkzeug und Druckunterlage eine beliebige äußere Formgebung möglich, wie beispielsweise die Form einer Unterlegscheibe oder eine Stabform. Die Dickschichttechnik erlaubt es aber auch, bei fester äußerer Form des Sensors verschiedene Oberflächenaufteilungen zu gestalten. Beispielsweise ist es bei einem scheibenförmigen Sensor möglich, die aktive Schicht entweder parallel zum Scheibenrand oder aber mäanderförmig auszugestalten.

### Zeichnung

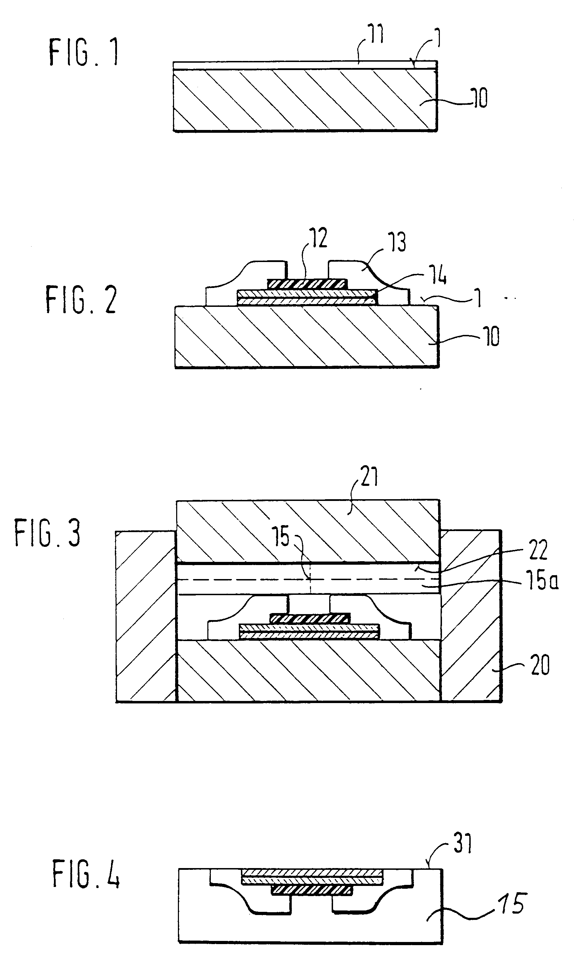

Ein Ausführungsbeispiel der Erfindung ist in der Zeichnung dargestellt und in der nachfolgenden Beschreibung näher erläutert. Es zeigen Figur 1 einen Schnitt der mit einem Trennmittel benetzten Druckunterlage, Figur 2 einen Schnitt der Druckunterlage nach Aufbringung der Sensorschichtanordnung unter Weglassung der Trennmittelschicht, Figur 3 einen Schnitt des Preßwerkzeuges mit darin befindlicher Kunststoffpreßmasse und eingelegter Sensoranordnung gemäß Figur 2 und Figur 4 einen Schnitt durch den fertigen Preßling.

### Beschreibung des Ausführungsbeispiels

In einem vorbereitenden Verfahrensschritt wird die Oberfläche einer Druckunterlage 10 hochglanzpoliert. Das dabei erzeugte Oberflächenprofil findet sich als Negativabdruck auf der späteren Sensoroberfläche 31 wieder. Mit der Oberflächenrauhigkeit der Druckunterlage wird also die Oberflächenrauhigkeit des fertiggestellten Sensors festgelegt. Die Bearbeitung der Oberfläche 1 der Druckunterlage 10 muß deshalb mit einem der angestrebten Güte der Sensoroberfläche 31 entsprechenden Aufwand durchgeführt werden. Als Material für die Druckunterlage 10 wird Stahl verwendet. Geeignet sind auch Aluminium sowie keramische Werkstoffe.

Im ersten Verfahrensschritt, Figur 1, wird die glattpolierte Oberfläche der Druckunterlage 10 vorzugsweise vollständig mit einem Trennmittel 11 benetzt. Dieser Schritt kann jedoch entfallen, wenn für die darauf aufgebrachte Dickschichtanordnung eine Paste verwendet wird, der ein Trennmittel bereits beigemischt wurde.

Im zweiten Verfahrensschritt, Figur 2, wird auf die hochglanzpolierte Seite 1 der Druckunterlage 10 durch Siebdruck zuerst eine Isolationsschicht 14 aufgedruckt. Diese kann unter Freilassung der Kontaktierungen wahlweise die gesamte Oberfläche der Druckunterlage bedecken. Zweckmäßig bedeckt sie aber nur den Teil der Oberfläche 1, auf den anschließend die Widerstandsbahn 12 aufgebracht wird. Um eine direkte Verbindung der Widerstandsbahn 12 mit der Oberfläche 31 auszuschließen, sollte die Isolationsschicht 14 eine geringfügig über die Fläche der Widerstandsbahn 12 hinausgehende Fläche besitzen. Als Material für die Isolationsschicht 14 eignet sich, speziell im Hinblick auf die Verpressung der einzelnen Schichten, eine Polymerpaste, vorzugsweise mit Phenolharz als Binder. Die Dicke der Isolationsschicht 14 liegt zweckmäßig bei 20 bis 25 µm. Da eine einzelne Isolationsschicht häufig noch Störstellen aufweist, sind im allgemeinen, um Porenfreiheit und somit gute Isolationseigenschaften zu gewährleisten, weitere Isolationsschichten vorzusehen. Als bei der Schichtdicke von 20 µm ausreichend erwiesen haben sich zwei bis drei Schichten.

Auf die Isolationsschichten 14 folgt eine druckempfindliche Widerstandsschicht, welche die Widerstandsbahn 12 bildet. Die für die Widerstandsbahn 12 gewünschte Struktur wird als Spiegelbild aufgedruckt. Die Widerstandsschicht besteht vorzugsweise aus leitfähigem Plastik-Material. Dieses hat gegenüber anderen druckempfindlichen Materialen, die grundsätzlich auch verwendet werden können, den Vorteil, daß es sich mit anderen ebenfalls auf Kunststoffbasis aufgebauten Schichten sehr innig verbinden läßt. Gut geeignete Leit-Plastik-Materialien sind auf Phenolharz basierende Pasten, wie sie beispielsweise bei der Fa. TOCOS, Japan, Serie 4 200 erhältlich sind. Die Dicke der druckempfindlichen Schicht 12 beträgt, wie die der Isolationsschicht, vorzugsweise 20 bis 25 µm, möglich sind aber auch von diesem Wert deutlich verschiedene Schichtdicken. Dabei ist bei größeren Schichtdicken zu berücksichtigen, daß infolge des dann größeren Bahnquerschnitts der Bahnwiderstand und damit auch das Meßsignal abnehmen. Soll diesem begegnet werden, kann durch Wahl eines Materials mit höherem spezifischen Widerstand eine Kompensation erreicht werden. Auch kleinere Schichtdicken können realisiert werden, dabei ist ein genügend feinkörniges sowie entsprechend niederohmiges Pastenmaterial zu verwenden.

Als dritte Schicht wird zur Kontaktierung der druckempfindlichen Widerstandsbahnen eine elektrisch leitfähige Schicht, vorzugsweise aus Leitpolymerpaste, aufgebracht, welche die Leitungsbahnen 13 bildet. Die Leitungsbahnen 13 werden zweckmäßig entlang der Ränder der Widerstandsbahn so aufgebracht, daß sie sowohl die Ränder der Widerstandsbahn 12, als auch die Ränder der darunter befindlichen Isolationsschichten 14 überlappen, und auf der Druckunterlage enden.

Bei der beschriebenen Ausführung ist eine spätere Kontaktierung des Sensors von der Sensoroberfläche her vorgesehen. Soll dagegen die Kontaktierung des Sensors von der Rückseite her erfolgen, ist eine an die Oberfläche der Druckunterlage grenzende Aufbringung der Leitungsbahnen nicht notwendig. Gegebenenfalls sind in diesem Fall andere besondere Vorrichtungen, wie beispielsweise Steckanschlüsse, für die Kontaktierung nach außen vorzusehen.

Für den dritten Verfahrensschritt, Figur 3, wird zunächst in ein Preßwerkzeug 20 bis 22 eine Kunststoffpreßmasse 15 gegebenen. Als Preßwerkzeug 20 bis 22 wird eine nach einer Seite offene Form mit vorzugsweise abnehmbaren Seitenteilen 20 und einem beweglichen Bodenteil 21 verwendet. Die Oberfläche 22 des Bodenteils 21, d. h. die zur Innenseite der Preßform gerichtete Fläche, ist glattpoliert. Durch die Gestaltung der Seitenteile 20 des Preßwerkzeuges 20 bis 22 wird die äußere Form des späteren Sensors festgelegt. Werden Formen mit Aussparungen gewünscht, wie z. B. eine Unterlegscheibenform, sind im Preßwerkzeug 20 bis 22 entsprechende Maßnahmen vorzusehen. Als gut geeignetes Kunststoffpreßmassenmaterial erwiesen haben sich Duroplaste, insbesondere Diallylphthalat, kurz mit DAP bezeichnet, sowie Phenol. Beide Stoffe sind bei Zimmertemperatur pulverförmig. Für eine leichtere Handhabung werden sie deshalb zweckmäßig in Tablettenform 15a gebracht. Das Preßmassenmaterial wird dann in das Preßwerkzeug 20 bis 22 gegeben. Damit das zunächst starre Ausgangsmaterial plastisch verformbar wird, wird der Preßvorgang bei erhöhter Temperatur durchgeführt. Die Temperatur ist dabei so hoch zu wählen, daß das Kunststoffmaterial in die viskose Phase übergeht, aber auch so niedrig, daß in der Schichtanordnung, vor allem an den durckempfindlichen Widerstandsbahnen, keine Verkohlung auftritt. Für die beschriebene Anordnung als geeignet erwiesen hat sich eine Temperatur von 130 °C bis 180 °C, vorzugsweise von ca. 150 °C.

Werden für die Schichtanordnung oder die Preßmasse nicht auf einem Kunststoff basierenden Materialien eingesetzt, ist gegebenenfalls eine entsprechende angepaßte Temperatur zu wählen. Der im Preßvorgang aufzubringende Druck, mit welchem die Kunststoffpreßmasse 15 mit der Schichtanordnung 11 - 14 verpreßt wird, ist so hoch zu wählen, daß eine ausreichende Härte des erzeugten Preßlings erreicht wird. Zweckmäßig ist ein Druck von mindestens 20 N/mm². Darüber hinausgehende Drücke sind möglich, bei sehr viel größeren Drücken ist zu berücksichtigen, daß die Schichtstruktur zerstört werden kann.

Abschließend wird der Preßling, Figur 4, bei einer Temperatur von 120 bis 200 °C in Luft ausgehärtet. Genaue Temperatur und Dauer der Aushärtung richten sich dabei individuell nach der Art des verwendeten Harzes sowie der jeweils zur Verfügung stehenden Ofenanlage. Sie sind so zu wählen, daß eine vollständige Polymerisation des Preßlings, Figur 4, und eine vollständige Austreibung von im Preßling, Figur 4, vorhandenen Lösungsmitteln erfolgt.

Nach Beendigung des Preßvorganges wird der durch die Verpressung der Schichtanordnung 11 bis 14 mit der Kunststoffpreßmasse 15 erzeugte Preßling, Figur 4, von der Druckunterlage getrennt. Nach Entfernung etwaiger Trennmittelreste liegt die Sensoroberfläche 31 frei, eine weitere Nachbehandlung ist nicht erforderlich.

Für die Glättungstiefe der Sensoroberfläche 31 kann bei entsprechender Vorbehandlung der Oberfläche 1 der Druckunterlage 10 ohne Mühe ein Wert von unter 0,5 µm erreicht werden. Die Druckunterlage 10 kann zur Herstellung weiterer Sensoren erneut verwendet werden.

In Erweiterung des beschriebenen Ausführungsbeispiels, Fig. 1 bis 4, können mehrere Widerstandsbahnen 12 mit einer entsprechend größeren Anzahl von Leitungsbahnen 13 auf einem einzelnen Sensor plaziert werden.

Das beschriebene Verfahren erlaubt ferner eine gleichzeitige und deshalb kostengünstige Fertigung mehrerer Sensoren in einem Verfahrensablauf. Dazu sind die Druckunterlage 10 und die zur Verfahrensdurchführung erforderlichen Werkzeuge, insbesondere das Preßwerkzeug 20 bis 22, so groß zu dimensionieren, daß mehrere Sensoren nebeneinander auf derselben Druckunterlage 10 angeordnet werden können. Das Verfahren kann darüber hinaus wie im Ausführunsbeispiel beschrieben durchgeführt werden. Durch Heraustrennen aus dem fertigen Preßling werden die einzelnen Sensoren erhalten.

## Patentansprüche

1. Verfahren zum Herstellen eines in Dickschichttechnik aufgebauten Sensors zum Bestimmen von Druckkräften, mit wenigstens einem Dickschichtwiderstand (12), welcher, vorzugsweise auf einer isolierenden Schicht (14), auf einer bevorzugt metallischen Druckunterlage (10), die zur Schichtanordnung hin eine glatte Oberfläche (1) besitzt, aufgebracht und an wenigstens zwei räumlich getrennten Stellen durch Leitungsbahnen (13) elektrisch kontaktiert ist, wobei die Oberflächen der Schichtanordnung (12 bis 14) so behandelt werden, daß sie planparallel zueinander sind, dadurch gekennzeichnet, daß die mit der Schichtanordnung (11 bis 14) zu versehende Oberfläche (1) der Druckunterlage (10) glattpoliert wird und daß die Druckunterlage (10) nach Fertigstellung der Schichtanordnung (11 bis 14) wieder entfernt wird.

2. Verfahren nach Anspruch 1, dadurch gekennzeichnet, daß die Schichtanordnung (11-14) in einem Preßwerkzeug (20-22) mit einer Kunststoffpreßmasse (15) verpreßt wird.

3. Verfahren nach Anspruch 2, dadurch gekennzeichnet, daß die Pressung bei einer erhöhten Temperatur erfolgt, wobei die Temperatur einerseits so hoch zu wählen ist, daß die Kunststoffpreßmasse (15) plastisch verformbar wird und andererseits so niedrig, daß in der Schichtanordnung (12 bis 14) keine Verkohlung auftritt.

4. Verfahren nach einem der vorhergehenden Ansprüche, dadurch gekennzeichnet, daß der bei der Pressung erzeugte Preßling, (Fig. 4), bei einer erhöhten Temperatur von 120 bis 200 Grad Celcius ausgehärtet wird.

5. Verfahren nach einem der vorhergehenden Ansprüche, dadurch gekennzeichnet, daß die der Schichtanordnung (11-14) zugewandte Oberfläche (1) der Druckunterlage (10) vor Aufbringung der Schichtanordnung (12-14) mit einem Trennmittel (11) benetzt wurde.

6. Verfahren nach einem der vorhergehenden Ansprüche, dadurch gekennzeichnet, daß für die Schichtanordnung (12-14) Pasten verwendet werden, denen ein Trennmittel beigemischt wurde.

7. Nach dem Verfahren gemäß Anspruch 2 herstellbarer Sensor, dadurch gekennzeichnet, daß der Dickschichtwiderstands (12) aus dem gleichen Grundmaterial besteht wie die Kunststoffpreßmasse (15).

8. Nach dem Verfahren gemäß Anspruch 2 herstellbarer Sensor, dadurch gekennzeichnet, daß die Leitungsbahnen (13) in Form einer Leitplastik-Schicht aufgebracht sind, die aus dem gleichen Grundmaterial besteht wie die Kunststoffpreßmasse (15).

## Claims

1. Method for producing a sensor, constructed using thick-film technology, for determining pressure forces, having at least one thick-film resistor (12) which is applied, preferably on an insulating layer (14), to a preferably metallic pressure base (10) which has a smooth surface (1) towards the layer arrangement, and which thick-film resistor (12) is made contact with electrically by lead tracks (13) at at least two physically separated points, the surfaces of the layer arrangement (12 to 14) being treated such that they are plane-parallel to one another, characterized in that the surface (1) of the pressure base (10) which is to be provided with the layer arrangement (11 to 14) is polished smooth, and in that the pressure base (10) is removed again after manufacture of the layer arrangement (11 to 14).

2. Method according to Claim 1, characterized in that the layer arrangement (11-14) is compressed in a pressing tool (20-22) with a plastic moulding compound (15).

3. Method according to Claim 2, characterized in that the compression is carried out at an elevated temperature, the temperature on the one hand having to be selected such that it is so high that the plastic moulding compound (15) can be deformed elastically, and on the other hand so low that no carbonization occurs in the layer arrangement (12 to 14).

4. Method according to one of the preceding claims, characterized in that the moulded blank which is produced during the compression (Figure 4) is cured at an elevated temperature of 120 to 200 degrees Celsius.

5. Method according to one of the preceding claims, characterized in that that surface (1) of the pressure base (10) which faces the layer arrangement (11-14) has been wetted with an isolating agent (11) before the layer arrangement (12-14) is applied.

6. Method according to one of the preceding claims, characterized in that pastes into which an isolating agent has been admixed are used for the layer arrangement (12-14).

7. Sensor which can be produced in accordance with the method according to Claim 2, characterized in that the thick-film resistor (12) consists of the same base material as the plastic moulding compound (15).

8. Sensor which can be produced in accordance with the method according to Claim 2, characterized in that the lead tracks (13) are applied in the form of a conductive plastic layer which consists of the same base material as the plastic moulding compound (15).

## Revendications

1. Procédé pour la fabrication d'un capteur constitué selon la technique des couches épaisses pour la détermination d'efforts de pression, avec au moins une résistance en couches épaisses (12), qui est rapportée, de préférence par l'intermédiaire d'une couche isolante (14), sur un support (10) de préférence métallique, qui présente par rapport au dispositif en couches, une surface lisse (1), et est mise en contact électrique par des pistes conductrices (13) en au moins deux points séparés dans l'espace, tandis que les surfaces de l'agencement de couches 12 à 14 sont traitées de façon qu'elles soient planes et parallèles entre elles, procédé caractérisé en ce que la surface (1) du support (10) devant être associée au dispositif en couches (11 à 14) est polie, et en ce que le support (10) après finition du dispositif en couches (11 à 14) est enlevé.

2. Procédé selon la revendication 1, caractérisé en ce que le dispositif en couches (11 à 14) est pressé dans un outil de pressage (20 à 22) avec une masse de pressage en matière plastique (15).

3. Procédé selon la revendication 2 caractérisé en ce que le pressage s'effectue à une température plus élevée, cette température devant, d'une part, être choisie suffisamment haute pour que la masse de pressage en matière plastique (15) soit susceptible d'être déformée plastiquement et devant, d'autre part, être suffisamment basse pour que aucune carbonisation n'apparaisse dans l'agencement de couches (12 à 14).

4. Procédé selon l'une des revendications précédentes caractérisé en ce que la pièce pressée obtenue lors du pressage (figure 4) est durcie à une température plus élevée entre 120 et 200° C.

5. Procédé selon l'une des revendications précédentes, caractérisé en ce que la surface (1) tournée vers le dispositif en couches (11 à 14) du support (10) est mouillée avec un agent de séparation (11) avant l'apport du dispositif en couches (12 à 14).

6. Procédé selon l'une des revendications précédentes, caractérisé en ce qu'on utilise pour le dispositif en couches (12 à 14) des pâtes auxquelles a été mélangé un agent de séparation.

7. Capteur susceptible d'être fabriqué d'après le procédé selon la revendication 2, caractérisé en ce que la résistance à couches épaisses (12) est constituée par le même matériau de base que la masse de pressage en matière plastique (15).

8. Capteur susceptible d'être fabriqué d'après le procédé selon la revendication 2, caractérisé en ce que les pistes conductrices (13) sont rapportées sous la forme d'une couche de plastique conducteur qui est constituée par le même matériau de base que la masse de pressage en matière plastique (15).
